(19) Europäisches Patentamt
European Patent Office
Office européen des brevets

(11) EP 4 451 451 A1

(12) EUROPEAN PATENT APPLICATION
published in accordance with Art. 153(4) EPC

(43) Date of publication:
**23.10.2024 Bulletin 2024/43**

(21) Application number: **23880310.0**

(22) Date of filing: **23.10.2023**

(51) International Patent Classification (IPC):
***H01M 50/451*** *(2021.01)* ***H01M 50/446*** *(2021.01)*
***H01M 50/403*** *(2021.01)* ***H01M 50/46*** *(2021.01)*
***H01M 50/414*** *(2021.01)* ***H01M 50/443*** *(2021.01)*
***H01M 50/491*** *(2021.01)*

(52) Cooperative Patent Classification (CPC):
**H01M 50/403; H01M 50/414; H01M 50/443; H01M 50/446; H01M 50/451; H01M 50/46; H01M 50/491**

(86) International application number:
**PCT/KR2023/016460**

(87) International publication number:
**WO 2024/085735 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 KR 20220136805**
**20.10.2023 KR 20230141362**

(71) Applicant: **LG Energy Solution, Ltd.**
**Seoul 07335 (KR)**

(72) Inventors:
- **KIM, Ji Hyeon**
  **Daejeon 34122 (KR)**
- **SUNG, Dong Wook**
  **Daejeon 34122 (KR)**
- **KA, Kyung Ryun**
  **Daejeon 34122 (KR)**
- **SUNG, In Hyouk**
  **Daejeon 34122 (KR)**
- **KIM, Hye Won**
  **Daejeon 34122 (KR)**

(74) Representative: **Hoffmann Eitle**
**Patent- und Rechtsanwälte PartmbB**
**Arabellastraße 30**
**81925 München (DE)**

# (54) SEPARATOR FOR SECONDARY BATTERY, METHOD FOR MANUFACTURING SAME, AND SECONDARY BATTERY

(57) There is provided a separator for a secondary battery, which has excellent dimensional stability even at high temperatures when it is a wet state in which an electrolyte has been injected. According to one aspect of the present disclosure, there is provided a separator for a secondary battery, including: a porous substrate; and a functional coating layer disposed on at least one surface of the porous substrate, wherein the functional coating layer includes a first coating layer and a second coating layer disposed on the first coating layer, the first coating layer contains inorganic particles, an acrylic binder, and polydopamine, and the second coating layer contains polydopamine.

FIG. 1

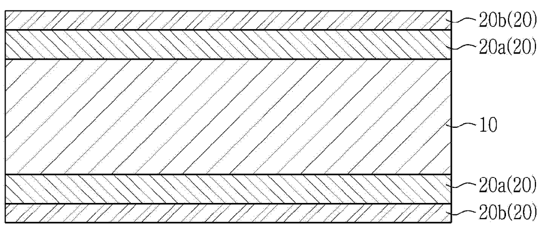


EP 4 451 451 A1

## Description

[Technical Field]

The present disclosure claims the benefits of the filing dates of Korean Patent Application No. 10-2022-0136805 submitted to the Korea Intellectual Property Office on October 21, 2022 and Korean Patent Application No. 10-2023-0141362 submitted to the Korea Intellectual Property Office on October 20, 2023, and the entire contents of which are included in the present disclosure.

The present disclosure relates to a separator for a secondary battery, and more specifically, to a separator for a secondary battery, a method for manufacturing the same, and a secondary battery.

[Background Art]

As representative examples of secondary batteries, lithium ion batteries are representative energy devices with high energy density that are composed based on a cathode, a separator, an anode, and an electrolyte to enable charging and discharging while chemical energy and electrical energy are being reversibly converted, and are widely used in small-sized electronic equipment such as mobile phones and laptops.

Recently, as responses to environmental issues, high oil prices, energy efficiency, and storage, applications to 5hybrid electric vehicles (HEV), plug-in electric vehicles (plug-in EV), electric bicycles (E-bikes), and energy storage systems (ESS) are rapidly expanding. Lithium-ion batteries are stable electrochemical devices insulated by a separator, but there is a possibility of heat generation and explosion due to short circuit occurred between the cathode and the anode due to internal or external battery abnormal phenomena or shocks so that ensuring the thermochemical safety of the separator as an insulator is the most important issue to consider.

One of the main research tasks in secondary batteries is to improve safety at high temperatures. For example, secondary batteries may allow battery explosion to be caused by high temperatures and high pressures inside the batteries that may be caused due to abnormal operating condition of the batteries, such as internal short circuit, overcharge condition exceeding the permitted current and voltage, exposure to high temperatures, deformation due to dropping or external impact, etc. Internal short-circuit due to shrinkage or damage of the separator that occurs when the batteries are exposed to high temperatures is a very serious situation, and much research is being conducted to identify the causes and find alternatives for that.

Meanwhile, if battery cells are stored at a high temperature state, there is a risk of ignition due to the possibility of an internal short circuit due to shrinkage of the separator, and excessive coating to prevent this may result in the occurrence of problems such as insufficient battery cell capacity, increased battery cell resistance, and increased battery cell thickness.

[Disclosure]

[Technical Problem]

An object of the present disclosure is to provide a separator for a secondary battery, which has excellent dimensional stability even at high temperatures when it is a wet state in which an electrolyte has been injected.

Another object of the present disclosure is to provide a separator for a secondary battery, which can increase the loading amount of polydopamine.

A further object of the present disclosure is to provide a separator for a secondary battery, which can increase the ionic conductivity of lithium ions.

An even further object of the present disclosure is to provide a method for manufacturing the separator for a secondary battery.

Still yet another object of the present disclosure is to provide a secondary battery including the separator for a secondary battery.

The objects of the present disclosure are not limited to the objects mentioned above, and other objects and advantages of the present disclosure that are not mentioned can be understood by the following description and will be more clearly understood by the Examples of the present disclosure. Additionally, it will be readily apparent that the objects and advantages of the present disclosure can be realized by means and combinations thereof as set forth in the claims.

[Technical Solution]

According to a first aspect of the present disclosure for achieving the above object, there is provided a separator

for a secondary battery, including: a porous substrate; and a functional coating layer disposed on at least one surface of the porous substrate, wherein the functional coating layer includes a first coating layer and a second coating layer disposed on the first coating layer, the first coating layer contains inorganic particles, an acrylic binder, and polydopamine, and the second coating layer contains polydopamine.

According to a second aspect of the present disclosure, the porous substrate in the first aspect may have its at least one surface coated with polydopamine.

According to a third aspect of the present disclosure, the second coating layer in the first or second aspect may consist of polydopamine.

According to a fourth aspect of the present disclosure, polydopamine of the first coating layer in any one of the first to third aspects may be coated on the surface of at least one of the acrylic binder and the inorganic particles.

According to a fifth aspect of the present disclosure, the first coating layer in any one of the first to fourth aspects may have a thickness of 0.1 to 5 μm, and the second coating layer may have a thickness of 0.005 to 0.05 μm.

According to a sixth aspect of the present disclosure, polydopamine in any one of the first to fifth aspects may have a decomposition temperature $T_d$ of 280 to 320°C.

According to a seventh aspect of the present disclosure, the acrylic binder in any one of the first to sixth aspects may have a glass transition temperature $T_g$ of -20 to 80°C.

According to an eighth aspect of the present disclosure, the acrylic binder in any one of the first to seventh aspects may have a weight average molecular weight $M_w$ of 100,000 to 2,000,000 g/mol.

According to a ninth aspect of the present disclosure, there is provided a method for manufacturing a separator for a secondary battery, including: a step S1 of immersing a preliminary separator including a porous substrate and a first coating layer disposed on at least one surface of the porous substrate in a dopamine precursor solution for 4 to 50 hours; and a step S2 of controlling the amount of dissolved oxygen in the dopamine precursor solution in which the preliminary separator is immersed, thereby forming a second coating layer on at least one surface of the preliminary separator, wherein the dopamine precursor solution has a pH of 7 to 10, and the first coating layer contains an acrylic binder.

According to a tenth aspect of the present disclosure, the amount of dissolved oxygen contained in the dopamine precursor solution in which the preliminary separator is immersed in the ninth aspect may be 8.0 to 11.0 ppm.

According to an eleventh aspect of the present disclosure, there is provided a secondary battery including: an anode; a cathode; a separator for a secondary battery according to any one of the first to eighth aspects, interposed between the anode and the cathode; and an electrolyte.

The means for solving the above tasks do not enumerate all the features of the present disclosure. The various features of the present disclosure and advantages and effects according thereto may be understood in more detail by referring to the specific Examples below.

[Advantageous Effects]

According to one aspect of the present disclosure, it is possible to provide a separator for a secondary battery, which improves dimensional stability at high temperatures when it is a wet state in which the electrolyte has been injected by increasing the loading amount of polydopamine. When a secondary battery is implemented using such a separator for a secondary battery, the problem of electrode exposure due to thermal shrinkage of the separator under high temperature conditions can be solved.

Specific effects of the present disclosure along with the above-described effects are described together below while explaining specific details for carrying out the invention.

[Description of Drawings]

FIG. 1 is a cross-sectional view of a separator for a secondary battery according to one embodiment of the present disclosure.

FIG. 2 is a schematic diagram showing a method for manufacturing a separator for a secondary battery according to one embodiment of the present disclosure.

FIG. 3 is scanning electron microscope (SEM) photographs of the separators according to Comparative Example 1 and Example 1.

FIG. 4a is a photograph showing the uniformity of the thickness of the coating layer included in the separator specimen according to Comparative Example 1. FIG. 4b is a photograph showing the uniformity of the thickness of the coating layer included in the separator specimen according to Comparative Example 2. FIG. 4c is a photograph showing the uniformity of the thickness of the coating layer included in the separator specimen according to Example

1. FIG. 4d is a photograph showing the uniformity of the thickness of the coating layer included in the separator specimen according to Example 2. FIG. 4e is a photograph showing the uniformity of the thickness of the coating layer included in the separator specimen according to Example 3. FIG. 4f is a photograph showing the uniformity of the thickness of the coating layer included in the separator specimen according to Example 4. FIG. 4g is a photograph showing the uniformity of the thickness of the coating layer included in the separator specimen according to Example 5. FIG. 4h is a photograph showing the uniformity of the thickness of the coating layer included in the separator specimen according to Example 6.

FIG. 5a is a photograph of the separator according to Comparative Example 1 into which an electrolyte was injected. FIG. 5b is a photograph of the separator according to Comparative Example 2 into which an electrolyte was injected. FIG. 5c is a photograph of the separator according to Example 1 into which an electrolyte was injected. FIG. 5d is a photograph of the separator according to Example 2 into which an electrolyte was injected. FIG. 5e is a photograph of the separator according to Example 3 into which an electrolyte was injected. FIG. 5f is a photograph of the separator according to Example 4 into which an electrolyte was injected. FIG. 5g is a photograph of the separator according to Example 5 into which an electrolyte was injected. FIG. 5h is a photograph of the separator according to Example 6 into which an electrolyte was injected.

[Mode for Disclosure]

Hereinafter, each configuration of the present disclosure will be described in more detail so that those skilled in the art to which the present disclosure pertains can easily implement it, but this is only one example, and the scope of rights of the present disclosure is not limited by the following contents.

In this specification, "a layer" or film may include, when observing a region in which the corresponding layer or film exists, a case where the layer or film is formed only in a portion of the corresponding region in addition to a case where the layer or film is formed in the entirety of the corresponding region. For example, the surface of the layer or film may be defined as including a flat form, a non-flat form, and a combination thereof; or, a continuous form, a discontinuous form, and a combination thereof. For example, when another member is composed of a layer or film directly on one member, the coverage of the other member with respect to the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more.

In this specification, "the weight average molecular weight" or "number average molecular weight" is a molecular weight converted to standard polystyrene and may be analyzed through a gel permeation chromatography (GPC) device. Here, the GPC analysis method may use tetrahydrofuran as a developing solvent and may be performed under the analysis conditions of a sample concentration of 5 mg/mL, a sample introduction amount of 100 $\mu$l, a temperature of 40°C, and a flow rate of 1 mL/min.

According to one aspect of the present disclosure, there is provided a separator for a secondary battery, including: a porous substrate; and a functional coating layer disposed on at least one surface of the porous substrate, wherein the functional coating layer includes a first coating layer and a second coating layer disposed on the first coating layer, the first coating layer contains inorganic particles, an acrylic binder, and polydopamine, and the second coating layer contains polydopamine.

According to one aspect of the present disclosure, the first coating layer may proceed with a condensation reaction between the amine group of polydopamine and the functional group of the acrylic binder, thereby significantly increasing the loading amount of polydopamine compared to the combination of a fluorine-based binder and polydopamine. Accordingly, it is possible to provide a separator for a secondary battery with improved dimensional stability at high temperatures when it is a wet state in which the electrolyte has been injected. When a secondary battery is implemented using such a separator for a secondary battery, the problem of electrode exposure due to thermal shrinkage of the separator under high temperature conditions can be solved.

According to another aspect of the present disclosure, the acrylic binder contained in the first coating layer may not be directly exposed to the electrolyte through the second coating layer containing polydopamine, and accordingly, as a condensation reaction between the functional group of the acrylic binder and the amine group of polydopamine progresses sufficiently so that it is possible to provide a separator for a secondary battery with improved dimensional stability at high temperatures when it is a wet state in which the electrolyte has been injected. If the second coating layer containing polydopamine does not exist, the acrylic binder of the first coating layer is immediately exposed to the electrolyte so that the condensation reaction between the acrylic binder and polydopamine may not proceed sufficiently, and accordingly, the dimensional stability effect in the wet state in which the electrolyte has been injected may not be fully realized.

Hereinafter, the configuration of the present disclosure will be described in more detail.

## 1. Separator for secondary battery

The separator for a secondary battery according to the present disclosure includes a porous substrate and a functional coating layer.

### Porous substrate

The porous substrate according to the present disclosure may electrically insulate the anode and the cathode to provide a moving path of lithium ions while preventing short circuits, and may be a porous structure with high resistance to the electrolyte and fine pore diameter.

As a constituent material of the porous substrate, any organic or inorganic material having electrical insulation properties can be used without particular restrictions. The porous substrate may include, for example, at least one selected from the group consisting of polyolefin, polyethylene terephthalate, polybutylene terephthalate, polyacetal, polyamide, polycarbonate, polyimide, polyether ether ketone, polyethersulfone, polyphenylene oxide, polyphenylene sulfide, and polyethylene naphthalene, and may specifically include polyolefin. Polyolefin not only has excellent applicability, but it can also increase the capacity per volume by increasing the ratio of the electrode active material layer in the battery by reducing the thickness of the separator. Specifically, polyolefin may have a weight average molecular weight $M_w$ of 100,000 to 500,000 g/mol. If the weight average molecular weight of polyolefin is less than the above numerical range, it may be difficult to secure sufficient mechanical properties, and if it exceeds the above numerical range, the shutdown function may not be implemented or molding may become difficult. The shutdown function refers to a function that blocks the movement of ions and prevents thermal runaway of the battery by dissolving the thermoplastic resin and thus closing the pores of the porous substrate when the temperature of the secondary battery increases.

The porous substrate may have a thickness of, for example, 3 to 12 μm or 5 to 12 μm. If the thickness of the porous substrate is less than the numerical range, the function of the conductive barrier may not be sufficient, and if it exceeds the numerical range, the resistance of the separator may excessively increase.

The pores contained in the porous substrate may have an average diameter of, for example, 10 to 100 nm. The pores contained in the porous substrate are formed in a structure in which the pores are connected to each other, and thus gas or liquid may pass from one surface of the porous substrate to the other surface thereof.

The porosity of the porous substrate is not particularly limited, but may be, for example, 10 to 95%.

At least one surface of the porous substrate according to the present disclosure may be coated with polydopamine. For example, the at least one surface of the porous substrate may be a surface exposed to the outside as an open surface of the porous substrate. Polydopamine is coated on the at least one surface of the porous substrate, and thus the wettability of the porous substrate for the electrolyte may be improved to improve the impregnation ability of the electrolyte, and accordingly, the resistance may be lowered to implement a secondary battery capable of high output and high capacity.

### Functional coating layer

The functional coating layer according to the present disclosure can improve dimensional stability in the wet state in which the electrolyte has been injected, and can increase the mechanical strength and ionic conductivity performance of the separator.

The functional coating layer according to the present disclosure is disposed on at least one surface of the porous substrate. That is, the functional coating layer according to one embodiment of the present disclosure may be disposed on one surface of the porous substrate, and the functional coating layer according to another embodiment of the present disclosure may be disposed on both surfaces of the porous substrate.

The functional coating layer according to the present disclosure contains polydopamine. Polydopamine according to one aspect of the present disclosure is contained in the functional coating layer, and a thermal shrinkage phenomenon of the separator occurred due to high temperature conditions when it is a wet state in which the electrolyte has been injected can be effectively prevented. Since polydopamine according to another aspect of the present disclosure possesses also adhesive power, it can effectively prevent detachment of inorganic particles contained in the functional coating layer, and provide strong adhesive power to the interface between the electrode and the separator to effectively transfer lithium ions.

Specifically, polydopamine may have a decomposition temperature $T_d$ of 280 to 320°C, more specifically 290 to 320°C, and more specifically 300 to 310°C. The decomposition temperature of polydopamine may be analyzed through thermogravimetric analysis (TGA). When the decomposition temperature of polydopamine satisfies the above numerical range, the dimensional stability of the separator in the wet state can be improved under high temperature conditions, and at the same time, the detachment of inorganic particles can be effectively prevented, and strong adhesive power at the interface between the electrode and the separator can be provided to effectively transfer the lithium ions.

Specifically, polydopamine may have a molecular weight of 1 to 1,000 kDa, specifically 100 to 1,000 kDa. When the molecular weight of polydopamine satisfies the above numerical range, the dimensional stability of the separator on the electrolyte can be improved under high temperature conditions and at the same time, detachment of inorganic particles can be effectively prevented. For example, the molecular weight of polydopamine may be analyzed by a gel permeation chromatography (GPC) method.

Polydopamine contained in the functional coating layer according to the present disclosure may have a loading amount of 0.1 g/$m^2$ or more, specifically 1.0 g/$m^2$ or more, more specifically 1.5 g/$m^2$ or more, and more specifically 1.9 g/$m^2$ or more. When the loading amount of polydopamine contained in the functional coating layer satisfies the above numerical range, the dimensional stability of the separator in the wet state can be improved under high temperature conditions. For example, the loading amount of polydopamine may be measured through a weight analysis method using weight analysis equipment commonly used in the relevant technical field.

The acrylic binder according to one aspect of the present disclosure is a particle-type binder and has low solubility in the solvent of the composition for forming a coating layer so that it may be a binder that exists in a particle state. The acrylic binder is contained in polydopamine and the functional coating layer, and thus can further increase the loading amount of polydopamine to further strengthen the function of polydopamine. Conventionally, the coating layer produced by mixing a fluorine-based binder with polydopamine had a low loading amount of polydopamine, which caused a problem in which the electrode was exposed due to thermal shrinkage of the separator in the wet state under high temperature conditions. The functional coating layer according to the present disclosure contains both an acrylic binder and polydopamine, thereby inducing a condensation reaction between the acrylic binder and polydopamine, thereby further increasing the loading amount of polydopamine in the separator. Accordingly, the problem of the electrode being exposed due to thermal shrinkage of the separator when it is a wet state in which the electrolyte has been injected can be easily solved. For example, the particle-type binder may have a solubility in the solvent of the composition for forming a coating layer of 1 g/100 mL or less, 0.1 g/100 mL or less, or 0.01 g/100 mL or less.

The acrylic binder according to another aspect of the present disclosure can provide binding power between the porous substrate and the functional coating layer, and can help form a surface binding or dot binding structure between a plurality of inorganic particles contained in the functional coating layer. Accordingly, the inorganic particles in the coating layer may not be detached.

The acrylic binder may have a glass transition temperature $T_g$ of -20 to 80°C, specifically 30 to 80°C, and more specifically 50 to 80°C. When the glass transition temperature of the acrylic binder satisfies the above numerical range, the loading amount of polydopamine may be further increased due to the combination of the acrylic binder and polydopamine.

The acrylic binder may have a weight average molecular weight $M_w$ of 100,000 to 2,000,000 g/mol, specifically 500,000 to 2,000,000 g/mol, and more specifically 500,000 to 1,000,000 g/mol. When the weight average molecular weight $M_w$ of the acrylic binder satisfies the above numerical range, the loading amount of polydopamine may be further increased due to the combination of the acrylic binder and polydopamine.

For example, the acrylic binder may include repeating units derived from (meth)acrylate or (meth)acrylic acid, and may be specifically polymethylmethacrylate, polybutylacrylate, polyacrylic acid, etc. The functional group (ester group or carboxyl group) of the acrylic binder may proceed with a condensation reaction with the amine group of polydopamine. Accordingly, the loading amount of polydopamine in the functional coating layer can be further increased.

FIG. 1 is a cross-sectional view of a separator for a secondary battery according to one embodiment of the present disclosure.

Referring to FIG. 1, the functional coating layer 20 according to the present disclosure includes a first coating layer 20a and a second coating layer 20b disposed on the first coating layer 20a. The first coating layer 20a may be disposed directly on the porous substrate 10, and the second coating layer 20b may be disposed directly on the first coating layer 20a. That is, the first and second coating layers 20a and 20b may be formed to be continuously to each other or separated from each other. As the second coating layer is disposed on the first coating layer, the acrylic binder contained in the first coating layer may not be directly exposed to the electrolyte, and accordingly, the condensation reaction between the functional group of the acrylic binder and the amine group of polydopamine sufficiently progresses so that it is possible to provide a separator 100 for a secondary battery with improved dimensional stability at high temperatures when it is a wet state in which the electrolyte has been injected. If the second coating layer containing polydopamine does not exist, the acrylic binder of the first coating layer is immediately exposed to the electrolyte, and the condensation reaction between the acrylic binder and polydopamine may not proceed sufficiently, and accordingly, the dimensional stability effect in the wet state in which the electrolyte has been injected may not be fully realized.

For example, the first coating layer 20a may have a thickness of 0.1 to 5 μm, more specifically 1 to 3 μm, and the second coating layer 20b may have a thickness of 0.005 to 0.05 μm, more specifically 0.01 to 0.03 μm.

According to another embodiment of the present disclosure, the second coating layer 20b and the first coating layer 20a may have a thickness ratio (second coating layer: first coating layer) of 1: 2 to 1: 1,000, specifically 1:50 to 1:150. When the thickness ratio of the second coating layer and the first coating layer satisfies the above numerical

range, the dimensional stability of the separator in the wet state in which the electrolyte has been injected under high temperature conditions can be improved, and strong adhesive force is provided to the interface between the electrode and the separator so that lithium ions can be transferred effectively.

The first coating layer 20a according to the present disclosure contains inorganic particles that contribute to improving the mechanical strength and heat resistance of the separator for a secondary battery.

Specifically, the inorganic particles are not particularly limited as long as they are electrochemically stable. That is, the inorganic particles that can be used in the present disclosure are not particularly limited as long as they do not cause oxidation and/or reduction reactions in the operating voltage range of the secondary battery to which they are applied (e.g., 0 to 5 V based on $Li/Li^+$).

As an example, when inorganic particles with a high dielectric constant are used as inorganic particles, the ionic conductivity of the electrolyte can be improved by contributing to an increase in the degree of dissociation of electrolyte salts in the liquid electrolyte, for example, lithium salts. For the above-mentioned reasons, the inorganic particles may be inorganic particles having a dielectric constant of 5 or more, inorganic particles having the lithium ion transfer ability, or a mixture thereof.

The inorganic particles having a dielectric constant of 5 or more may be one or mixtures of two or more selected from the group consisting of $Al_2O_3$, $SiO_2$, $ZrO_2$, AlO(OH), $Al(OH)_3$, $Mg(OH)_2$, $BaSO_4$, $TiO_2$, $BaTiO_3$, $Pb(Zr_xTi_{1-x})O_3$ (PZT, where $0 < x < 1$), $Pb_{1-x}La_xZr_{1-y}Ti_yO_3$ (PLZT, where $0 < x < 1$, $0 < y < 1$), $(1-x)Pb(Mg_{1/3}Nb_{2/3})O_{3-x}PbTiO_3$ (PMN-PT, where $0 < x < 1$), $HfO_2$, $SrTiO_3$, $SnO_2$, $CeO_2$, MgO, NiO, CaO, ZnO, and SiC.

The inorganic particles having the lithium ion transfer ability may be one or mixtures of two or more selected from the group consisting of lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$ series glass ($0 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$ series glass ($Li_xSi_yS_z$, $0 < x < 3$, $0 < y < 2$, $0 < z < 4$), and $P_2S_5$ series glass ($Li_xP_yS_z$, $0 < x < 3$, $0 < y < 3$, $0 < z < 7$).

For example, the inorganic particles may have an average particle diameter $D_{50}$ of 1 nm to 4 $\mu$m, specifically 10 nm to 2 $\mu$m, and more specifically 50 nm to 1 $\mu$m in order to form a uniform thickness coating layer and appropriate porosity. The "average particle diameter $D_{50}$" refers to a particle diameter at 50% point of the particle number cumulative distribution according to the particle diameter. The average particle diameter may be measured using a laser diffraction method. Specifically, after dispersing the powder to be measured in a dispersion medium, it is introduced into a commercially available laser diffraction particle size measuring device (e.g., Microtrac S3500) to measure the difference in diffraction patterns according to particle size when the particles pass through the laser beam, thereby enabling the particle size distribution to be calculated.

According to another embodiment of the present disclosure, the second coating layer 20b does not contain inorganic particles and an acrylic binder and may be made of polydopamine. The second coating layer is present, and thus the dimensional stability of the separator on the electrolyte can be remarkably improved.

Polydopamine of the first coating layer 20a according to the present disclosure may be coated on the surface of at least one of the acrylic binder and the inorganic particles, and specifically may be coated on the surface of the acrylic binder and the inorganic particles. Polydopamine is coated on the surface of the acrylic binder and the inorganic particles so that detachment of the inorganic particles can be effectively prevented by inducing a condensation reaction between polydopamine coated on the surface of the inorganic particles and the acrylic binder.

## 2. Method for manufacturing separator for secondary battery

FIG. 2 is a schematic diagram showing a method for manufacturing a separator for a secondary battery according to one embodiment of the present disclosure.

Referring to FIG. 2, a preliminary separator before dip coating may include a porous substrate 10, inorganic particles 24 and an acrylic binder 22 which are on the porous substrate 10. When the preliminary separator is immersed in a dopamine precursor solution, polydopamine 26 may be coated on at least one of the acrylic binder 22, the inorganic particles 24, and the porous substrate 10.

Step S1: Immersion step of preliminary separator (ceramic coated separator: CCS)

Referring to FIG. 2, the method for manufacturing a separator for a secondary battery according to the present disclosure may include a step S1 of immersing a preliminary separator including a porous substrate and a first coating layer disposed on at least one surface of the porous substrate in a dopamine precursor solution for 4 to 50 minutes.

The dopamine precursor solution may be, for example, a mixture in which dopamine and a basic buffer solution are mixed. Dopamine may be converted to polydopamine by proceeding with a cyclization reaction by an oxidation process even without an initiator as shown in Reaction Formula 1 below, and then proceeding with a polymerization reaction.

[Reaction Formula 1]

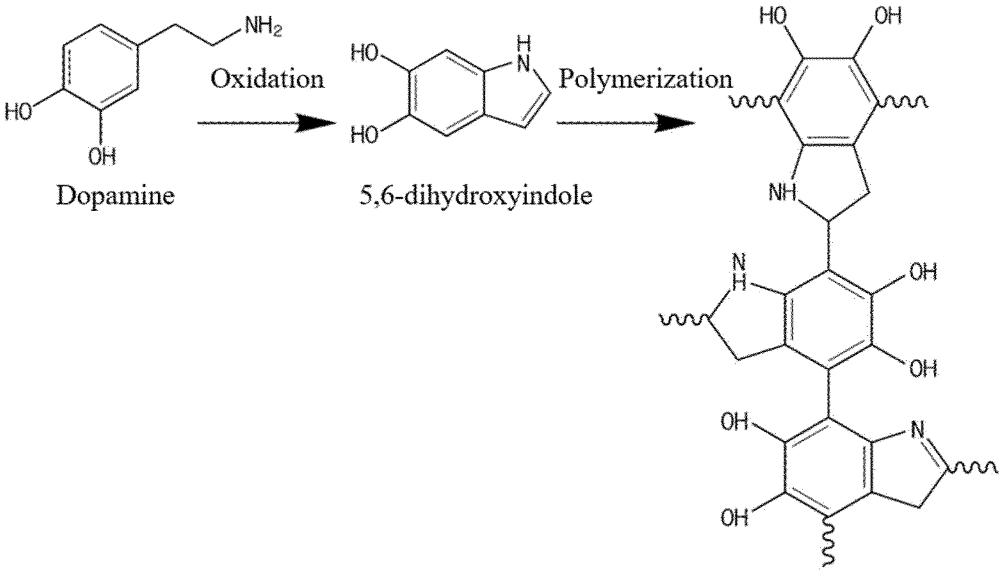


Dopamine 5,6-dihydroxyindole Polydopamine

The dopamine precursor solution may have a pH of 7 to 10, specifically 7 to 9, more specifically 7.5 to 8.5, more specifically 7.8 to 8.2, and more specifically 7.9 to 8.1. When the pH of the dopamine precursor solution satisfies the above numerical range, the loading amount of polydopamine in the functional coating layer may be sufficiently increased, and polydopamine can be uniformly distributed. The pH of the dopamine precursor solution may vary by adjusting the concentration of the basic buffer solution.

Specifically, a time for immersing the preliminary separator in the dopamine precursor solution may be 4 to 48 hours, more specifically 12 to 48 hours, and more specifically 40 to 48 hours or 46 to 48 hours. When the time for immersing the preliminary separator in the dopamine precursor solution satisfies the above numerical range, the loading amount of polydopamine in the functional coating layer may be sufficiently increased, and the uniformity of the coating layer may become excellent.

The preliminary separator may include, for example, a ceramic coated separator (CCS) structure commonly used in the relevant technical field.

Step S2: Step of forming second coating layer;

The method for manufacturing a separator for a secondary battery according to the present disclosure may include the step S2 of controlling the amount of dissolved oxygen in the dopamine precursor solution in which the preliminary separator is immersed, thereby forming a second coating layer on at least one surface of the preliminary separator.

As a means of controlling the amount of dissolved oxygen in the dopamine precursor solution in which the preliminary separator is immersed, for example, a method of controlling the degree of opening and closing of the reaction vessel may be used. Since an oxidation process of performed by exposing it to oxygen may be necessary in order for the polymerization reaction from the dopamine precursor solution to polydopamine to proceed, the amount of dissolved oxygen in the dopamine precursor solution may affect the synthesis reaction of polydopamine.

Specifically, the amount of dissolved oxygen contained in the dopamine precursor solution in which the preliminary separator is immersed may be 8.0 to 11.0 ppm, specifically 8.0 to 10.0 ppm, and more specifically 8.0 to 9.0 ppm. When the amount of dissolved oxygen contained in the dopamine precursor solution in which the preliminary separator is immersed satisfies the above numerical range, polydopamine that can increase the loading amount of polydopamine in the functional coating layer may be easily synthesized. As an analytical method for measuring the amount of dissolved oxygen, for example, Winkler-azide modification using manganese sulfate and an alkaline potassium iodine sodium azide solution may be used.

According to one embodiment of the present disclosure, the optimal process parameter combination of the pH of the dopamine precursor solution, the time for immersing the preliminary separator in the dopamine precursor solution, and the degree of oxygen exposure (e.g., the amount of dissolved oxygen in the dopamine precursor solution) is derived so that it is possible to provide a separator with excellent dimensional stability even at high temperatures when it is a wet state by increasing the loading amount of polydopamine in the functional coating layer.

According to another embodiment of the present disclosure, the step S2 may include a step of drying the preliminary separator immersed in the dopamine precursor solution in order to induce a condensation reaction between polydopamine and an acrylic binder. Specifically, the step S2 may include a step of drying the preliminary separator immersed in the dopamine precursor solution at 60 to 80°C for 4 to 8 hours under vacuum conditions, more specifically, at 60 to 70°C for 5 to 7 hours. When the drying temperature and drying time ranges of the preliminary separator immersed in the dopamine precursor solution are satisfied, the condensation reaction between the acrylic binder and polydopamine may sufficiently proceed.

**3. Secondary battery**

Another embodiment of the present disclosure may provide a secondary battery including: an anode; a cathode; the separator for a secondary battery, which is interposed between the anode and cathode; and an electrolyte. The above-described parts and repeated explanations will be briefly explained or omitted.

Anode

The anode according to the present disclosure may include an anode current collector and an anode active material layer disposed on at least one surface of the anode current collector. The anode active material layer may contain an anode active material, a conductive material, and an anode binder.

The anode current collector may serve as a path of transferring electrons from the outside so that an electrochemical reaction occurs in the anode active material, or receiving electrons from the anode active material and sending them to the outside. For example, copper, stainless steel, aluminum, nickel, titanium, calcined carbon, or an aluminum or stainless steel surface treated with carbon, nickel, titanium, silver, etc. may be used as the anode current collector, and specifically, a transition metal that adsorbs carbon well, such as copper or nickel, may also be used as a current collector. For example, the anode current collector may have a thickness of 6 μm to 20 μm, but the thickness of the anode current collector is not limited thereto.

The anode active material may serve to store or release lithium ions and generate electricity. For example, the anode active material may include at least one of silicon-based active material particles and graphite-based active material particles.

One or more selected from the group consisting of Si, $SiO_x$ ($0<x\leq2$), an Si-C composite, and an Si-Y alloy (Y is any one element selected from the group consisting of alkali metals, alkaline earth metals, transition metals, Group 13 elements, Group 14 elements, and rare earth elements) may be used as the silicon-based active material particles.

The graphite-based active material particles may include one or more selected from the group consisting of artificial graphite, natural graphite, graphitized carbon fiber, and graphitized mesocarbon microbeads.

The content of the anode active material may be 80 to 97% by weight based on the total solid content contained in the anode active material layer.

The conductive material can improve conductivity between active material particles in the electrode or with metal current collectors and prevent the binder from acting as an insulator. The conductive material may be, for example, one conductive material or mixtures of two or more conductive materials selected from the group consisting of graphite, carbon black, carbon fiber, metal fiber, metal powder, conductive whisker, conductive metal oxide, activated carbon, and polyphenylene derivatives, and more specifically, one conductive material or mixtures of two or more conductive materials selected from the group consisting of natural graphite, artificial graphite, super-p, acetylene black, Ketjen black, channel black, furnace black, lamp black, summer black, denka black, aluminum powder, nickel powder, zinc oxide, potassium titanate, and titanium oxide.

The anode binder can suppress separation between anode active material particles or between the anode and the current collector. Polymers commonly used in electrodes in the relevant technical field can be used as the anode binder. Nonlimiting examples of such an anode binder may include poly(vinylidene fluoride co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, carboxyl methyl cellulose, etc., but are not limited thereto.

Cathode

The cathode according to the present disclosure may include a cathode current collector and a cathode active material layer disposed on at least one surface of the cathode current collector. The cathode active material layer may contain a cathode active material, a conductive material, and a cathode binder.

For example, the cathode current collector is not particularly limited as long as it has high conductivity without causing chemical changes in the battery. Specifically, copper, stainless steel, aluminum, nickel, titanium, calcined carbon, a copper or stainless steel surface treated with carbon, nickel, titanium, silver, etc., an aluminum-cadmium alloy, etc., may be used as the cathode current collector. The cathode current collector may typically have a thickness of 6 to 20 $\mu$m.

For example, the cathode active material may include a lithium transition metal oxides. The lithium transition metal oxide may be one or more selected from the group consisting of $Li_{x1}CoO_2$ (0.5<x1<1.3), $Li_{x2}NiO_2$ (0.5<x2<1.3), $Li_{x3}MnO_2$ (0.5<x3<1.3), $Li_{x4}Mn_2O_4$ (0.5<x4<1.3), $Li_{x5}(Ni_{a1}Co_{b1}Mn_{c1})O_2$ (0.5<x5<1.3, 0<a1<1, 0<b1<1, 0<c1<1, a1+b1+c1=1), $Lix_6Ni_{1-y1}Co_{y1}O_2$ (0.5<x6<1.3, 0<y1<1), $Li_{x7}Co_{1-y2}Mn_{y2}O_2$ (0.5<x7<1.3, 0≤y2<1), $Li_{x8}Ni_{1-y3}Mn_{y3}O_2$ (0.5<x8<1.3, 0≤y3<1), $Li_{x9}(Ni_{a2}Co_{b2}Mn_{c2})O_4$ (0.5<x9<1.3, 0<a2<2, 0<b2<2, 0<c2<2, a2+b2+c2=2), $Li_{x10}Mn_{2-z1}Ni_{z1}O_4$ (0.5<x10<1.3, 0<z1<2), $Li_{x11}Mn_{2-z2}Co_{z2}O_4$ (0.5<x11<1.3, 0<z2<2), $Li_{x12}CoPO_4$ (0.5<x12<1.3), and $Li_{x13}FePO_4$ (0.5<x13<1.3).

The conductive material used in the cathode may be the same as or different from the conductive material used in the anode.

The cathode binder may be the same as or different from the anode binder.

Electrolyte

The electrolyte according to the present disclosure may include a solvent and a lithium salt.

The solvent according to the present disclosure may be, for example, one or mixtures of two or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone, ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The lithium salt according to the present disclosure may include anions such as, for example, $NO_3^-$, $F^-$, $Cl^-$, $Br^-$, $I^-$, and $PF_6^-$.

The secondary battery according to the present disclosure may be a cylindrical, prismatic, or pouch-shaped secondary battery, but is not particularly limited as long as it corresponds to a charge/discharge device.

Another embodiment of the present disclosure may provide a battery module including the secondary battery as a unit cell and a battery pack including the same. The battery pack may be used as, for example, a power source for one or more medium-to-large devices selected from the group consisting of: power tools; electric cars including an electric vehicle (EV), a hybrid electric vehicle (HEV), and a plug-in hybrid electric vehicle (PHEV); or power storage systems.

Hereinafter, Examples of the present disclosure will be described in detail so that those skilled in the art to which the present disclosure pertains can easily implement the present disclosure, but this is only one example, and the scope of rights of the present disclosure is not limited by the following contents.

**[Manufacturing Example 1: Manufacturing of separator for secondary battery]**

**<Comparative Example 1: Manufacturing of CCS separator>**

An acrylic particle-type binder (polymethyl methacrylate) with a glass transition temperature of 80°C and a weight average molecular weight $M_w$ of 500,000 g/mol was added to a solvent (water) and then dissolved at 25°C for 2 hours to prepare a polymer solution (solid content = 35% by weight). After adding inorganic particles ($Al_2O_3$) with an average particle diameter $D_{50}$ of 0.5 $\mu$m to the polymer solution, the inorganic particles were crushed and pulverized using a ball mill for 12 hours or more to prepare a composition for forming a first coating layer, in which an acrylic particle-type binder and inorganic particles ($Al_2O_3$) were mixed at a weight ratio of 1:9.

The composition for forming a first coating layer was each applied to both surfaces of a polyethylene porous substrate with a thickness of 10 $\mu$m and a porosity of 48% by a slot-die coating method, and then dried at 60°C for 5 minutes to form coating layers with an individual thickness of 1.5 $\mu$m (loading amount of inorganic particles: 2.7 g/$m^2$) respectively. As a result, a preliminary separator (ceramic coated separator; CCS) with a total thickness of 13 $\mu$m was manufactured.

**<Example 1: pH of dopamine precursor solution = 8/48 hours immersion/partial opening of container>**

After dissolving dopamine in a basic buffer solution (20 mM Tris-HCl buffer) at a concentration of 2 mg/mL using a Petri dish, the lid of the Petri dish was partially opened to prepare a dopamine precursor solution (dissolved oxygen content = 8 ppm) with a pH of 8. The preliminary separator (CCS) according to Comparative Example 1 was

immersed in the dopamine precursor solution for 48 hours and then dried under vacuum conditions at 60°C for 6 hours to finally manufacture a separator for a secondary battery. A condensation reaction was induced between the ester group of polymethyl methacrylate and the amine group of polydopamine by drying the preliminary separator immersed in the dopamine precursor solution.

**<Comparative Example 2: When fluorine-based binder was used unlike Example** 1>

A preliminary separator according to Comparative Example 2 was manufactured in the same manner as Comparative Example 1 except that a poly(vinylidene fluoride-co-hexafluoropropylene) (PVdF-HFP) copolymer binder with a weight average molecular weight of 500,000 g/mol and a content of HFP-derived units of 14% by weight was used instead of the acrylic binder.

Thereafter, a separator for a secondary battery according to Comparative Example 2 was manufactured in the same manner as Example 1 except that the preliminary separator according to Comparative Example 2 was used instead of the preliminary separator according to Comparative Example 1.

**<Comparative Example 3: Manufacturing of separator in which second coating layer was not present unlike Example 1>**

30 g of $Al_2O_3$ (average particle diameter $D_{50}$: 0.5 μm) as inorganic particles, which are the same as those in Comparative Example 1, and 2 g of dopamine were mixed in 1,000 mL of a basic aqueous solution (Tris-buffer, pH 8.5), and stored at 20°C for 4 hours to induce self-polymerization of dopamine. Afterwards, it was repeatedly ultrasonic washed with secondary distilled water according to the medium removal method and completely dried at 50°C to obtain inorganic particles with a polydopamine coating layer (thickness: 20 nm) formed on the surface.

A separator according to Comparative Example 3 was manufactured in the same manner as in Comparative Example 1 except that inorganic particles with the manufactured polydopamine coating layer formed on the surface were used instead of the inorganic particles of Comparative Example 1. As a result, the separator according to Comparative Example 3 does not have a second coating layer.

**<Example 2: Unlike Example 1, pH of dopamine precursor solution** = **7/immersion for 24 hours/entire container closing>**

A separator for a secondary battery was manufactured in the same manner as in Example 1 except that a dopamine precursor solution with a pH of 7 was prepared by adjusting the concentration of the basic buffer solution, the polymerization reaction of polydopamine was performed under oxygen-blocking conditions in which the entire Petri dish was closed, and the immersion time of the preliminary separator was changed to 24 hours.

**<Example 3: Partial opening of container unlike Example 2>**

A separator for a secondary battery was manufactured in the same manner as in Example 2 except that the Petri dish was partially opened to prepare a dopamine precursor solution (content of dissolved oxygen = 8 ppm).

**<Example 4: Entire opening of container unlike Example 2>**

A separator for a secondary battery was manufactured in the same manner as in Example 2 except that the Petri dish was entirely opened to prepare a dopamine precursor solution (content of dissolved oxygen = 9 ppm).

**<Example 5: When immersion time was changed to 24 hours unlike Example 1>**

A separator for a secondary battery was manufactured in the same manner as in Example 1 except that it was changed to immersing the preliminary separator (CCS) for 24 hours instead of immersing the preliminary separator (CCS) according to Example 1 in the dopamine precursor solution for 48 hours.

**<Example 6: When pH of dopamine precursor solution was 9 unlike Example 5>**

A separator for a secondary battery was manufactured in the same manner as in Example 5 except that the pH of the dopamine precursor solution was changed to 9.

[Table 1]

| Classificati on | Comparative Example 1 | Comparative Example 2 | Comparative Example 3 | Example 1 | Example 2 | Example 3 | Example 4 | Example 5 | Example 6 |
|---|---|---|---|---|---|---|---|---|---|
| Binder of first coating layer | Acrylic resin | Fluorine-based resin | Acrylic resin | Acrylic resin | Acrylic resin | Acrylic resin | Acrylic resin | Acrylic resin | Acrylic resin |
| pH of dopamine precursor immersion solution | - | 8 | - | 8 | 7 | 7 | 7 | 8 | 9 |
| Degree of opening and closing of container | - | Partial opening | - | Partial opening | Entire closing | Partial opening | Entire opening | Partial opening | Partial opening |
| Immersion time (hour) | - | 48 | - | 48 | 24 | 24 | 24 | 24 | 24 |

**[Experimental Example 1: Analysis of loading amount of polydopamine in functional coating layer]** For the separator specimens (size: 50 mm × 50 mm) according to Comparative Examples 1 to 3 and Examples 1 to 6 above, the loading amounts of polydopamine were analyzed by a weight measurement method using weight analysis equipment under normal pressure (ambient) conditions.

[Table 2]

| | Comparative Example 1 | Comparative Example 2 | Comparative Example 3 | Example 1 | Example 2 | Example 3 | Example 4 | Example 5 | Example 6 |
|---|---|---|---|---|---|---|---|---|---|
| Loading amount of polydopamine ($g/m^2$) | 0 | 0.3 | 0.0002 | 1.9 | 0.1 | 0.7 | 0.5 | 1.1 | 0.8 |

Referring to Tables 1 and 2 above, it can be confirmed that three factors of pH of the dopamine precursor solution, degree of opening and closing of the container (degree of oxygen exposure), and time for the preliminary separator to be immersed in the dopamine precursor solution (immersion time) all have a complex effect on the loading amount of polydopamine. In particular, it can be confirmed that, when the pH of the dopamine precursor solution is 8, the container is partially opened, and the immersion time is set to 24 to 48 hours, the loading amount of polydopamine can exceed 1.0 $g/m^2$ as shown in Examples 1 and 5. From the perspective of the loading amount of polydopamine, comparing Comparative Example 2 and Example 1, it can be confirmed that when an acrylic binder and polydopamine are combined, the loading amount of polydopamine is remarkably increased compared to the combination of a fluorine-based binder and polydopamine.

**[Experimental Example 2: SEM photographs of separators according to Comparative Example 1 and Example 1]**

FIG. 3 is scanning electron microscope (SEM) photographs of the separators according to Comparative Example 1 and Example 1.

Referring to FIG. 3, it can be confirmed that a functional coating layer containing polydopamine was introduced into the separator of Example 1.

**[Experimental Example 3: Uniformity evaluation of thicknesses of separators]**

The uniformities for the thicknesses of the coating layers included in the separator specimens (size: 50 mm × 50 mm) according to Comparative Examples 1 and 2, and Examples 1 to 6 above were observed with the naked eye.

FIG. 4a is a photograph showing the uniformity of the thickness of the coating layer included in the separator specimen according to Comparative Example 1. FIG. 4b is a photograph showing the uniformity of the thickness of the coating layer included in the separator specimen according to Comparative Example 2. FIG. 4c is a photograph showing the uniformity of the thickness of the coating layer included in the separator specimen according to Example 1. FIG. 4d is a photograph showing the uniformity of the thickness of the coating layer included in the separator specimen according to Example 2. FIG. 4e is a photograph showing the uniformity of the thickness of the coating layer included in the separator specimen according to Example 3. FIG. 4f is a photograph showing the uniformity of the thickness of the coating layer included in the separator specimen according to Example 4. FIG. 4g is a photograph showing the uniformity of the thickness of the coating layer included in the separator specimen according to Example 5. FIG. 4h is a photograph showing the uniformity of the thickness of the coating layer included in the separator specimen according to Example 6.

Referring to FIGS. 4a to 4h, it could be confirmed with the naked eye that the uniformities for the thicknesses of the coating layers included in the separators of Examples 1 to 6 were superior to those of Comparative Examples 1 and 2. In particular, in the case of Comparative Example 2, which combined a fluorine-based binder and polydopamine, it could be confirmed that the uniformity performance for the thickness of the coating layer was greatly reduced.

**[Manufacturing Example 2: Manufacturing of secondary battery simulated sample]**

A sample pouch was manufactured by injecting one 5 cm*5 cm separator and 1 g of a mobile electrolyte into a 10 cm*9 cm sized three-sided sealing Al pouch and then sealing the upper end portions. The mobile electrolyte consists of a solution state in which 1M $LiPF_6$ is dissolved in a carbonate-based mixed solvent in which ethylene carbonate and ethyl methyl carbonate are mixed at a volume ratio of 1:1.

**[Experimental Example 4: Wet thermal shrinkage evaluation at high temperatures]**

The sample pouch according to Manufacturing Example 2 above was stored in a convection oven at 135°C for 30 minutes, and then the dimensions in the transverse direction (TD) were measured. Afterwards, the wet thermal shrinkage rate of the separator was calculated according to Equation 1 below. The calculated results are shown in Table 3 below.

FIG. 5a is a photograph of the separator according to Comparative Example 1 into which an electrolyte was injected. FIG. 5b is a photograph of the separator according to Comparative Example 2 into which an electrolyte was injected. FIG. 5c is a photograph of the separator according to Example 1 into which an electrolyte was injected. FIG. 5d is a photograph of the separator according to Example 2 into which an electrolyte was injected. FIG. 5e is a photograph of the separator according to Example 3 into which an electrolyte was injected. FIG. 5f is a photograph of the separator according to Example 4 into which an electrolyte was injected. FIG. 5g is a photograph of the separator according to Example 5 into which an electrolyte was injected. FIG. 5h is a photograph of the separator according to Example 6 into which an electrolyte was injected.

[Equation 1]

$$\text{Wet thermal shrinkage rate of separator} = [(L_i - L_f)/L_i)] \times 100$$

In Equation 1, $L_i$ is a length before shrinkage in the transverse direction, and $L_f$ is a length after shrinkage in the transverse direction.

[Table 3]

| Classification | Wet thermal shrinkage rate (%) in TD direction at high temperatures |
|---|---|
| Comparative Example 1 | 36 |
| Comparative Example 2 | 30 |
| Comparative Example 3 | 36 |
| Example 1 | 14 |
| Example 2 | 38 |
| Example 3 | 25 |
| Example 4 | 34 |
| Example 5 | 23 |
| Example 6 | 36 |

Referring to Table 3 and FIGS. 5a to 5h, it can be confirmed that, when the pH of the dopamine precursor solution is 8, the container is partially opened, and the immersion time is adjusted to 24 to 48 hours, the wet thermal shrinkage rates of the separators under high temperature conditions are lowered as shown in Examples 1 and 5. Comparing Comparative Example 2 and Example 1 from the binder perspective, when combining the acrylic binder and polydopamine compared to the combination of the fluorine-based binder and polydopamine, it can be confirmed that the thermal shrinkage rate of the separator is remarkably further lowered at high temperatures and in the electrolyte-injected wet state. This is presumed to be the result of remarkably increasing the loading amount of polydopamine as a condensation reaction is proceeded between the functional group of the acrylic binder and the amine group of polydopamine compared to the combination of the fluorine-based binder and polydopamine.

When comparing Comparative Example 3 and Example 1 from the wet thermal shrinkage rate perspective of the separator at high temperatures according to the presence of the second coating layer containing polydopamine, it can be confirmed that the wet thermal shrinkage rate at high temperatures increases in the case of Comparative Example 3 using inorganic particles of which surface is coated with polydopamine, whereas the thermal shrinkage rate of the separator is remarkably lowered at high temperatures and in the electrolyte-injected wet state in the case of Example 1 provided with a second coating layer containing polydopamine. Accordingly, even if the inorganic particles having the polydopamine coating layer formed on the surface thereof are simply used, the effect of lowering the wet thermal shrinkage rate of the separator may not be expressed if the second coating layer is not present.

Although the preferred embodiments of the present disclosure have been described in detail above, the scope of rights of the present disclosure is not limited thereto, and various modifications and improved forms of those skilled in the art using the basic concept of the present disclosure defined in the following claims also fall within the scope of the rights of the present disclosure.

[Explanation of reference numerals]

10: Porous substrate
20: Functional coating layer
20a: First coating layer
20b: Second coating layer
100: Separator for secondary battery

## Claims

1. A separator for a secondary battery, comprising:

   a porous substrate; and
   a functional coating layer disposed on at least one surface of the porous substrate,
   wherein the functional coating layer includes a first coating layer and a second coating layer disposed on the first coating layer, the first coating layer contains inorganic particles, an acrylic binder, and polydopamine, and the second coating layer contains polydopamine.

2. The separator for a secondary battery of claim 1, wherein the porous substrate has its at least one surface coated with polydopamine.

3. The separator for a secondary battery of claim 1, wherein the second coating layer is consisting of polydopamine.

4. The separator for a secondary battery of claim 1, wherein polydopamine of the first coating layer is coated on the surface of at least one of the acrylic binder and the inorganic particles.

5. The separator for a secondary battery of claim 1, wherein the first coating layer has a thickness of 0.1 to 5 $\mu$m, and the second coating layer has a thickness of 0.005 to 0.05 $\mu$m.

6. The separator for a secondary battery of claim 1, wherein polydopamine has a decomposition temperature $T_d$ of 280 to 320°C.

7. The separator for a secondary battery of claim 1, wherein the acrylic binder has a glass transition temperature $T_g$ of -20 to 80°C.

8. The separator for a secondary battery of claim 1, wherein the acrylic binder has a weight average molecular weight $M_w$ of 100,000 to 2,000,000 g/mol.

9. A method for manufacturing a separator for a secondary battery, comprising:

   a step S1 of immersing a preliminary separator comprising a porous substrate and a first coating layer disposed on at least one surface of the porous substrate in a dopamine precursor solution for 4 to 50 hours; and
   a step S2 of controlling the amount of dissolved oxygen in the dopamine precursor solution in which the preliminary separator is immersed, thereby forming a second coating layer on at least one surface of the preliminary separator,
   wherein the dopamine precursor solution has a pH of 7 to 10, and
   the first coating layer contains an acrylic binder.

10. The method of claim 9, wherein the amount of dissolved oxygen contained in the dopamine precursor solution in which the preliminary separator is immersed, is 8.0 to 11.0 ppm.

11. A secondary battery comprising:

    an anode;
    a cathode;
    a separator for a secondary battery according to claim 1, interposed between the anode and the cathode; and
    an electrolyte.

# FIG. 1

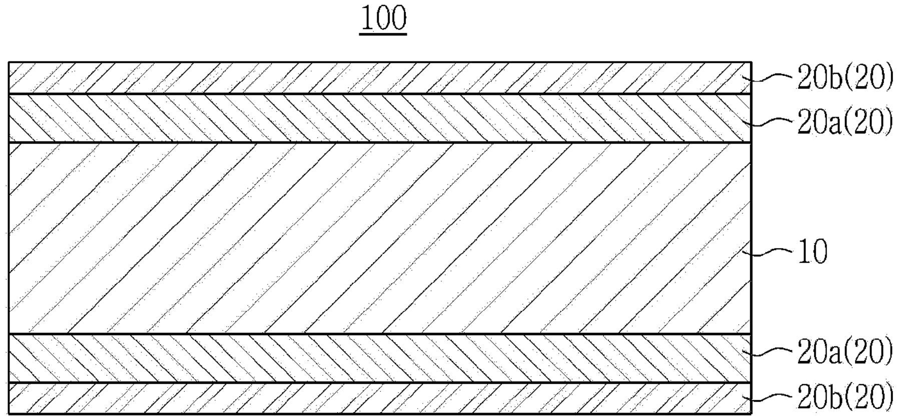
100
20b(20)
20a(20)
10
20a(20)
20b(20)

# FIG. 2

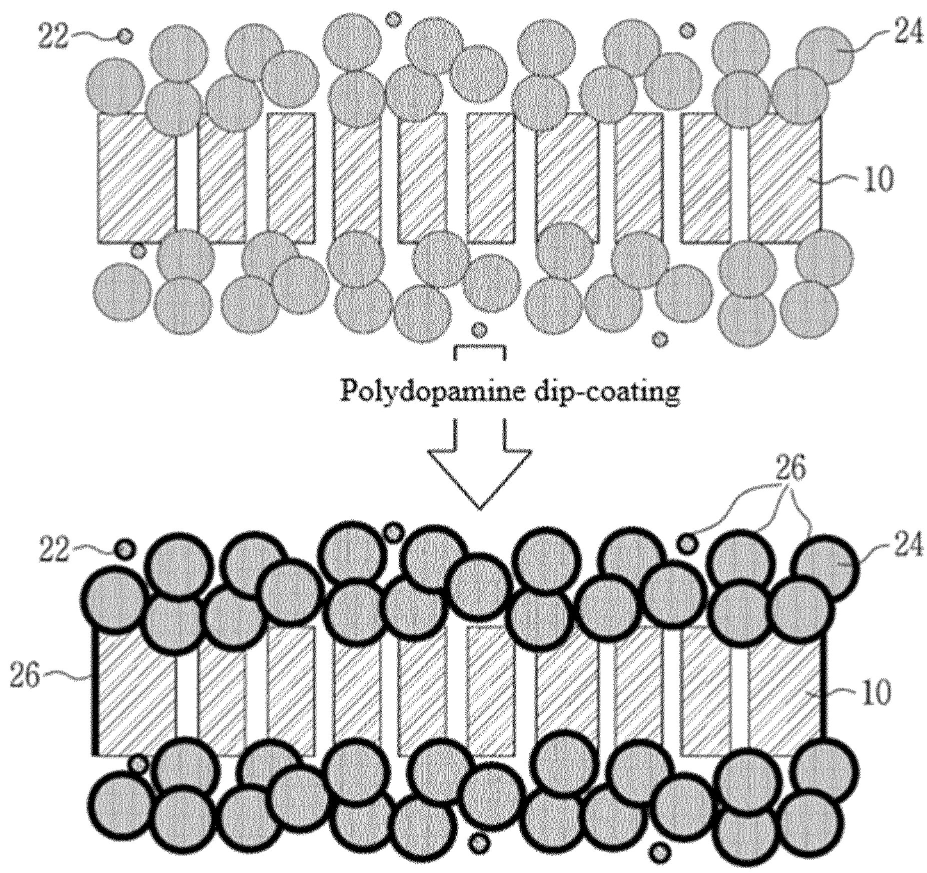
22
24
10
Polydopamine dip-coating
26
22
24
26
10

# FIG. 3

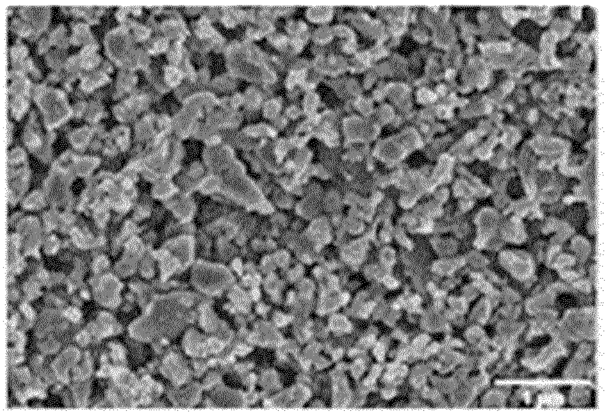

Comparative Example 1

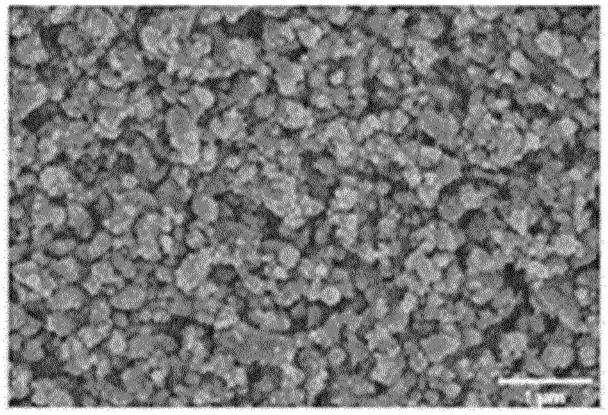

Example 1

# FIG. 4a

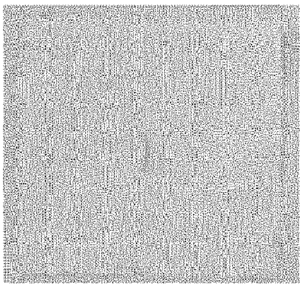

# FIG. 4b

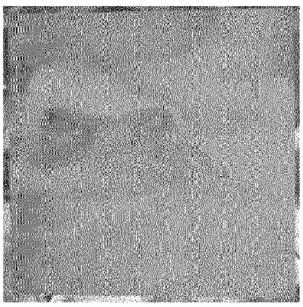

FIG. 4c

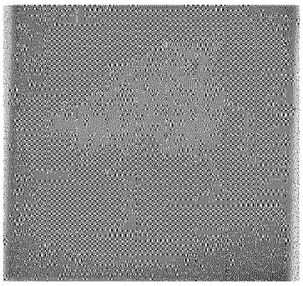

FIG. 4d

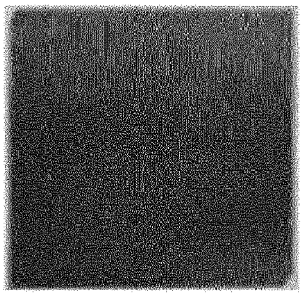

FIG. 4e

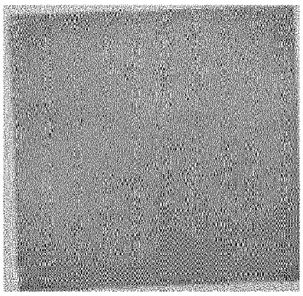

FIG. 4f

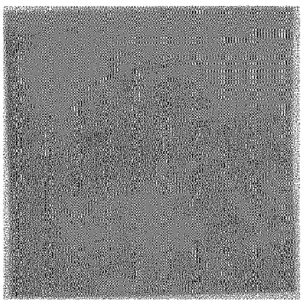

FIG. 4g

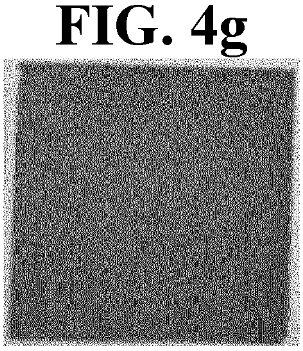

FIG. 4h

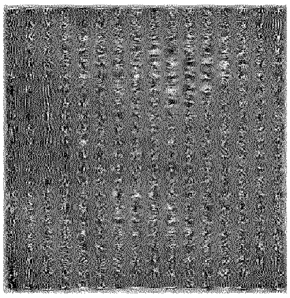

FIG. 5a

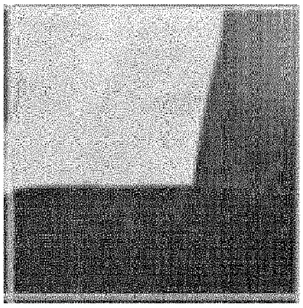

FIG. 5b

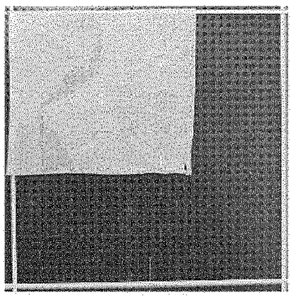

FIG. 5c

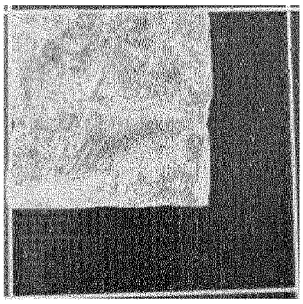

FIG. 5d

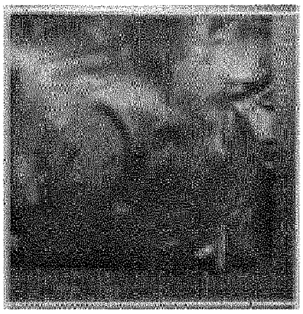

FIG. 5e

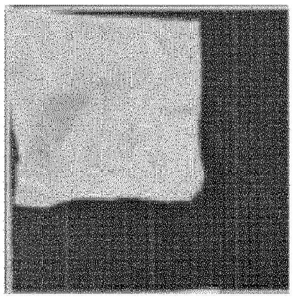

FIG. 5f

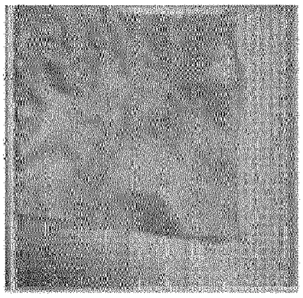

FIG. 5g

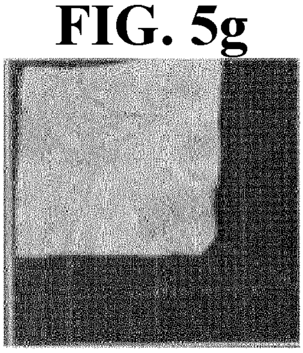

FIG. 5h

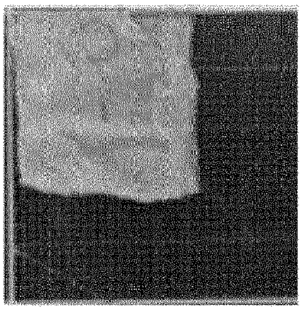

## INTERNATIONAL SEARCH REPORT

International application No.
**PCT/KR2023/016460**

**A. CLASSIFICATION OF SUBJECT MATTER**

**H01M 50/451**(2021.01)i; **H01M 50/446**(2021.01)i; **H01M 50/403**(2021.01)i; **H01M 50/46**(2021.01)i; **H01M 50/414**(2021.01)i; **H01M 50/443**(2021.01)i; **H01M 50/491**(2021.01)i

According to International Patent Classification (IPC) or to both national classification and IPC

**B. FIELDS SEARCHED**

Minimum documentation searched (classification system followed by classification symbols)

H01M 50/451(2021.01); B01D 69/02(2006.01); B01D 71/06(2006.01); H01M 10/0525(2010.01); H01M 2/16(2006.01); H01M 50/403(2021.01); H01M 50/446(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 분리막(separator), 다공성(porous), 코팅층(coating layer), 무기입자(inorganic particle), 폴리도파민(polydopamine), 아크릴계 바인더(acrylic binder)

**C. DOCUMENTS CONSIDERED TO BE RELEVANT**

| Category* | Citation of document, with indication, where appropriate, of the relevant passages | Relevant to claim No. |
|---|---|---|
| Y | DAI, Jianhui et al. A rational design of separator with substantially enhanced thermal features for lithium-ion batteries by the polydopamine–ceramic composite modification of polyolefin membranes. Energy & Environmental Science. 2016, Vol. 9, pp. 3252-3261 (07 September 2016). See abstract; pages 3253-3254; and figure 1. | 1-11 |
| Y | KR 10-2022-0139051 A (HYUNDAI MOTOR COMPANY et al.) 14 October 2022 (2022-10-14) See paragraphs [0021] and [0036]; claims 1-4; and figures 1-2. | 1-11 |
| Y | KR 10-2013-0099463 A (LG CHEM, LTD.) 06 September 2013 (2013-09-06) See paragraph [0040]; and claims 4 and 12. | 5,7 |
| Y | WO 2019-049510 A1 (KURARAY CO., LTD.) 14 March 2019 (2019-03-14) See paragraph [0042]; and claim 1. | 6 |
| Y | KR 10-2013-0134844 A (IUCF-HYU (INDUSTRY-UNIVERSITY COOPERATION FOUNDATION HANYANG UNIVERSITY)) 10 December 2013 (2013-12-10) See paragraph [0050]; and claims 1, 4 and 7. | 9-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 February 2024** | **06 February 2024** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/016460**

| Patent document cited in search report | | | Publication date (day/month/year) | Patent family member(s) | | | Publication date (day/month/year) |
|---|---|---|---|---|---|---|---|
| KR | 10-2022-0139051 | A | 14 October 2022 | CN | 115207557 | A | 18 October 2022 |
| | | | | DE | 102021212924 | A1 | 13 October 2022 |
| | | | | US | 2022-0328930 | A1 | 13 October 2022 |
| KR | 10-2013-0099463 | A | 06 September 2013 | KR | 10-1903189 | B1 | 01 October 2018 |
| WO | 2019-049510 | A1 | 14 March 2019 | TW | 201912736 | A | 01 April 2019 |
| KR | 10-2013-0134844 | A | 10 December 2013 | KR | 10-1938009 | B1 | 11 January 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220136805
- KR 1020230141362